# EUROPEAN PATENT APPLICATION

(11) **EP 2 320 042 A1**
(43) Date of publication of application: **11.05.2011**
(21) Application number: 09794475.5
(22) Date of filing: 08.07.2009
(51) Int. Cl.: F01N 3/02, B60K 35/00, G01D 7/00

(54) **VEHICULAR BACK PROCESSING SYSTEM**

(30) Priority: 11.07.2008 JP 2008181359
(71) Applicant: Hitachi Construction Machinery Co., Ltd, Tokyo 112-0004 (JP)
(72) Inventor: KAMIYA, Shohei, Tsuchiura-shi Ibaraki 300-0013 (JP); ISHIKAWA, Kouji, Tsuchiura-shi Ibaraki 300-0013 (JP); ARAI, Yasushi, Tsuchiura-shi Ibaraki 300-0013 (JP); TSUKADA, Hidenobu, Tsuchiura-shi Ibaraki 300-0013 (JP); NAKAMURA, Tsuyoshi, Tsuchiura-shi Ibaraki 300-0013 (JP)
(74) Representative: Jansen, Cornelis Marinus
(86) International application number: PCT/JP2009/062458
(87) International publication number: WO 2010/005031

(57) **Abstract**

PROBLEM: To provide an exhaust gas post-treatment system for a vehicle, which in the course of regeneration, can surely ascertain whether or not there is any object approaching a body of the vehicle from behind.

SOLUTION: Provided are a filter 4 arranged in an exhaust passage 3 of an engine 2 to trap PM therein, a trapped and deposited PM amount sensing means 6 for sensing a deposited amount of PMdeposited in the filter 4, a fuel injector 7 for burning and removing PM deposited in the filter 4 to conduct regeneration of the filter 4, a rearward monitoring camera 8 for monitoring a scene rearward of a vehicle body, a display module 9 for displaying monitoring information from the rearward monitoring camera 8, and a controller 10 having a regeneration processing unit for executing control processing to actuate the fuel injector 7 and to perform regeneration. The controller 10 includes a display continuation processing unit for executing control processing such that during the regeneration by the fuel injector 7, the monitoring information from the rearward monitoring camera 8 is continuously displayed on a display screen 9a of the display module 9.

## Description

### Technical Field

This invention relates to an exhaust gas post-treatment system for a vehicle such as a construction machine like a hydraulic excavator. The exhaust gas post-treatment system is provided with a filter and a regeneration means for regenerating the filter. The filter is arranged in an exhaust passage of an engine, which is installed on the vehicle, to trap exhaust gas particles therein.

### Background Art

As a conventional technology of this kind, there is the technology disclosed in Patent Document 1. This conventional technology is provided with a particulate filter arranged in an exhaust passage of an engine to trap exhaust gas particles therein, that is, a filter for trapping PM therein. Also provided are exhaust gas pressure sensors arranged upstream and downstream of the particulate filter, respectively, to sense a differential pressure, specif ically a trapped and deposited PM amount sensing means for sensing a deposited amount of PM deposited in the filter, a fuel injection valve for feeding fuel into the engine and for being used to regenerate the filter, in other words, a regeneration means for performing regeneration, and a manual regeneration switch for operating the regeneration means. Further provided are an image pickup camera capable of capturing an image of a rearward vicinity of a vehicle, in other words, a rearward monitoring means for monitoring a scene rearward of a body of the vehicle, a display screen of a navigation system, said display screen being adapted to display an image captured by the image pickup camera, in other words, a display module for displaying monitoring information from the rearward monitoring means, and a control unit for controlling regeneration by the fuel injection valve, in other words, a control module having a regeneration processing unit for executing control processing to perform regeneration by the regeneration means.

This conventional technology is designed to display an image of a scene rearward of the body on the display screen only when the distance to an object, such as another vehicle, existing rearward of the body is small upon operation of the manual regeneration switch. In other words, the conventional technology is designed not to display an image of a scene rearward of the body on the display screen when the above-mentioned distance to the object such as the another vehicle is equal to or greater than a predetermined value, and to perform regeneration when an image of a scene rearward of the body is not displayed as described above.
Patent Document 1: JP-A-2005-127206

### Disclosure of the Invention

### Problem to Be Solved by the Invention

According to the above-mentioned conventional technology, no image of a scene rearward of the body is displayed on the display screen during regeneration of the filter. The conventional technology, therefore, involves a potential problem that, even when an object such as someone or a flammable item approaches a surrounding of an exhaust system in the rear of the body in the course of such regeneration, no prompt measure can be taken to avoid a danger such as a fire or casualty to such an object.

With the above-mentioned actual circumstances of the conventional technology in view, the present invention has as an object thereof the provision of an exhaust gas post-treatment system for a vehicle, which in the course of regeneration, can surely ascertain whether or not there is any object approaching a body of the vehicle from behind.

### Means for Solving the Problem

To achieve this object, an exhaust gas post-treatment system according to the present invention for a vehicle having an engine is arranged on the vehicle, and is provided with a filter arranged in an exhaust passage of the engine to trap PM therein, a trapped and deposited PM amount sensing means for sensing a deposited amount of PM deposited in the filter, a regeneration means for raising a temperature of exhaust gas flowing into the filter such that PM deposited in the filter is burned and removed to conduct regeneration of the filter, a rearward monitoring means for monitoring a scene rearward of a body of the vehicle, a display module for displaying monitoring information from the rearward monitoring means, and a control module having a regeneration processing unit for executing control processing to perform regeneration by the regeneration means. The exhaust gas post-treatment system according to the present invention for the vehicle is characterized in that the control module is provided with a display continuation processing unit for executing control processing such that during the regeneration treatment by the regeneration means, the monitoring information from the rearward monitoring means is continuously displayed on the display module.

According to the present invention constructed as described above, the regeneration means is actuated by control processing at the regeneration processing unit of the control module when the deposited PM amount sensed by the trapped and deposited PM amount sensing means has reached a value at or over which regeneration is needed. As a result, PM deposited in the filter is burned and removed to conduct regeneration of the filter. During such regeneration treatment by the regeneration means, monitoring information from the rearward monitoring means is continuously displayed on the display module by control processing at the display continuation processing unit. Based on this display on the display module, it is possible to surely ascertain, in the course of regeneration, whether or not there is any object approaching the body from behind. If there is an object approaching the body from behind in the course of such regeneration, a prompt measure can be taken to avoid a danger to the object.

Preferably, the system according to the present invention may be characterized in that in the above-described invention, the control module includes the display continuation processing unit. The present invention constructed as described immediately above can be reduced in the number of processing units.

Preferably, the system according to the present invention may be characterized in that in the above-described invention, the system further comprises a need-of-regeneration notification means for making a notification to urge regeneration by the regeneration means and a manual regeneration start means for instructing a start of regeneration by the regeneration means, and the control module has a display-start processing unit for executing control processing to start displaying the monitoring information from the rearward monitoring means on the display module when the deposited amount of PM as sensed by the deposited PM amount sensing means has reached a value at and over which regeneration is needed, a need-of-regeneration notification processing unit for executing control processing to actuate the need-of-regeneration notification means when the control processing at the display-start processing unit has been executed, and a need-of-regeneration notification stop processing unit for executing control processing to stop a notification by the need-of-regeneration notification means when the manual regeneration start means has been operated. The present invention constructed as described immediately above can realize the regeneration of the filter in accordance with an operator's manual operation of the manual regeneration start means in accordance with a notification by the need-of-regeneration notification means.

Preferably, the system according to the present invention may be characterized in that in the above-described invention, the control module has a display-start processing unit for executing control processing that starts displaying the monitoring information from the rearward monitoring means on the display module when the deposited amount of PM as sensed by the deposited PM amount sensing means has reached the value at and over which regeneration is needed, and a regeneration-start processing unit for automatically starting the control processing at the regeneration processing unit in accordance with control processing at the display-start processing unit. The present invention constructed as described immediately above can automatically realize the regeneration of the filter by control processing at the regeneration-start processing unit in the control module without relying upon operator's manual operation when the deposited PM amount has reached a value at and over which regeneration is needed.

Preferably, the system according to the present invention may be characterized in that in the above-described invention, the system further comprises an in-regeneration notification means for notifying that regeneration treatment by the regeneration means is under way, and the control module has an in-regeneration notification processing unit for executing control processing to keep the in-regeneration notification means actuated in accordance with control processing at the regeneration processing unit during the regeneration treatment by the regeneration means. The present invention constructed as described immediately above can surely remind, based on a notification by the in-regeneration notification means, an operator or people around the vehicle that the filter is in regeneration and is in a state that requires attention.

Preferably, the system according to the present invention may be characterized in that in the above-described invention, the system further comprises a regeneration stop means for instructing a stop of regeneration treatment by the regeneration means, and the control module has a regeneration-stop processing unit for executing control processing to forcedly stop the regeneration treatment, which is under way by the regeneration means, when the regeneration stop means has been operated. The present invention constructed as described immediately above can forcedly stop regeneration treatment, which is under way by the regeneration means, by operating the regeneration stop means, for example, when a dangerous object has approached the rear of the body in the course of the regeneration, thereby making it possible to promptly avoid a danger.

### Advantageous Effects of the Invention

Owing to the provision of the display continuation processing unit for executing control processing such that during regeneration treatment by the regeneration means, monitoring information from the rearward monitoring means is continuously displayed on the display module, the present invention can continuously display monitoring the information from the rearward monitoring means on the display module by control processing at the display continuation processing unit during the regeneration treatment by the regeneration means, and in the course of the regeneration, can surely ascertain whether or not there is any object approaching the body from behind. As a consequence, it is possible to take a prompt measure to avoid a danger to any object approaching the body from behind. The present invention can, therefore, realize the regeneration of a filter with extremely high safety compared with before.

### Brief Description of the Drawings

[FIG. 1] FIG. 1 is a block diagram showing a first embodiment of the exhaust gas post-treatment system according to the present invention for the vehicle.
[FIG. 2] FIG. 2 is a flowchart illustrating a processing procedure in the post-treatment system according to the first embodiment of the present invention.
[FIG. 3] FIG. 3 is a flowchart illustrating a processing procedure in an exhaust gas post-treatment system according to a second embodiment of the present invention.

### Modes for Carrying out the Invention

Best modes for carrying out the post-treatment system according to the present invention for the vehicle will hereinafter be described with reference to the drawings.

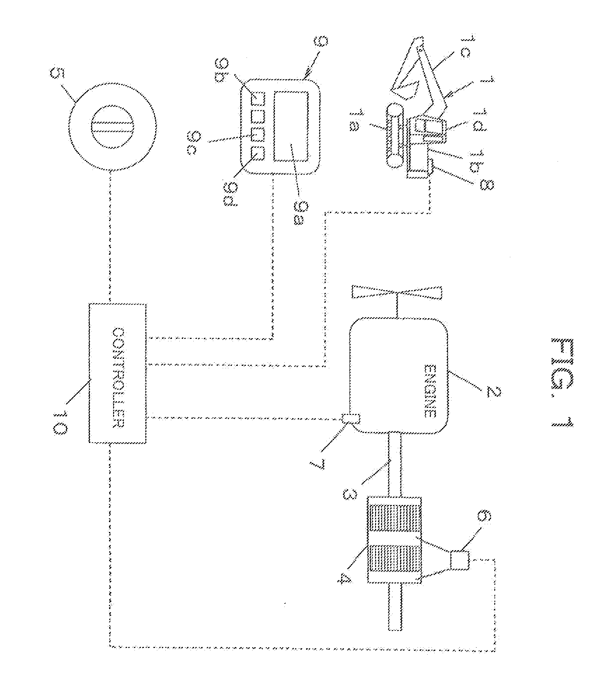

FIG. 1 is a block diagram showing a first embodiment of the post-treatment system according to the present invention for the vehicle.

The vehicle on which the post-treatment system according to the first embodiment shown in FIG. 1 is arranged is, for example, a hydraulic excavator 1, and this hydraulic excavator 1 is provided with a travel base 1a, a revolving upperstructure 1b mounted on the travel base 1a, and a front working mechanism 1c attached tiltably in an up-to-down direction to the revolving upperstructure 1b to perform work such as digging work. As an operator's cab 1d is mounted on the revolving upperstructure 1a. This hydraulic excavator 1 is further provided with an unillustrated hydraulic pump for feeding pressure oil to perform traveling of the travel base 1a, revolving of the revolving upperstructure 1b or digging work or the like by the front working mechanism 1c, and also with an engine 2 for driving the hydraulic pump.

The post-treatment system according to this first embodiment is still further provided with a filter 4 arranged in an exhaust passage 3 of the engine 2 to trap exhaust gas particles, in other words, PM (particulate matter) and a deposited PM amount sensing means 6 for sensing a deposited amount of PM deposited in the filter 4. The engine 2 is designed to be started by a key switch 5. The exhaust passage 3 is connected to an unillustrated muffler.

In addition, this first embodiment is also provided with a regeneration means for raising the temperature of exhaust gas flowing into the filter 4 such that PM deposited in the filter 4 is burned and removed to conduct regeneration of the filter 4, for example, a fuel injector 7 attached to the engine 2.

Also provided is a rearward monitoring means for monitoring a scene rearward of a body of the hydraulic excavator 1, for example, a rearward monitoring camera 8 arranged on a counterweight, which is disposed in a rear part of the revolving upperstructure 1b, at a position adjacent an outlet of the above-mentioned muffler (not shown).

Further provided is a display module 9 arranged in the operator's cab 1d to display monitoring information from the rearward monitoring camera 8. This display module 9 is provided not only with a display screen 9a but also with a need-of-regeneration notification means 9b for making a display of notification, for example, warning to urge regeneration of the filter 4 by the fuel injector 7, a manual regeneration start means 9c composed, for example, of a switch to instruct a start of regeneration by the fuel injector 7, and an in-regeneration notification means 9d for making a display of notification, for example, warning to the effect that regeneration treatment by the fuel injector 7 is under way. It is to be noted that the above-mentioned key switch 5 also serves, for example, as a regeneration stop means for instructing a stop of regeneration treatment of the filter 4 by the fuel injector 7.

The above-mentioned key switch 5, deposited PM amount sensing means 6, fuel injector 7, rearwardmonitoring camera 8 and display module 9 are electrically connected to a control module having a regeneration processing unit for executing control processing to realize regeneration by the fuel injector 7, specifically a controller 10.

This first embodiment is still further provided with a display continuation processing unit for executing control processing to continuously display, on the display screen 9a of the display module 9, monitoring information from the rearward monitoring camera 8 during regeneration treatment by the fuel injector 7. This display continuation processing unit is included, for example, in the controller 10.

The controller 10 includes, in addition to the above-mentioned regeneration processing unit and display continuation processing unit, other processing units to be described subsequently herein. Described specifically, the controller 10 also includes a display-start processing unit for executing control processing to start displaying monitoring information from the rearward monitoring camera 8 on the display module 9 when the deposited amount of PM as sensed by the deposited PM amount sensing means 6 has reached a predetermined value at and over which regeneration is needed, a need-of-regeneration notification processing unit for executing control processing to actuate the need-of-regeneration notification means 9b when the control processing at the display-start processing unit has been executed, and a need-of-regeneration notification stop processing unit for executing control processing to stop a notification by the need-of-regeneration notification means 9b when the manual regeneration start means has been operated.

The controller 10 further includes a manual regeneration start processing unit for starting the above-mentioned control processing at the regeneration processing unit by an operation of the manual regeneration start means 9c, an in-regeneration notification processing unit for executing control processing to actuate the in-regeneration notification means 9d during the regeneration treatment by the fuel injector 7 in accordance with the above-mentioned control processing at the regeneration processing unit, and a regeneration-stop processing unit for executing control processing to forcedly stop the regeneration treatment, which is under way by the fuel injector 7, when the regeneration stop means has been operated, specifically the above-mentioned key switch 5 has been operated back to an initial position.

The controller 10 still further includes a display-stop processing unit for executing control processing to stop displaying the monitoring information from the rearward monitoring camera 8 on the display module 9 when the deposited PM amount sensed by the deposited PM amount sensing means 6 has reached a value at or below which no regeneration is needed, specifically a value smaller than the above-mentioned predetermined value, and an in-regeneration notification stop processing unit for executing control processing to stop a notification by the in-regeneration notification means 9d in combination with the control processing at the display-stop processing unit.

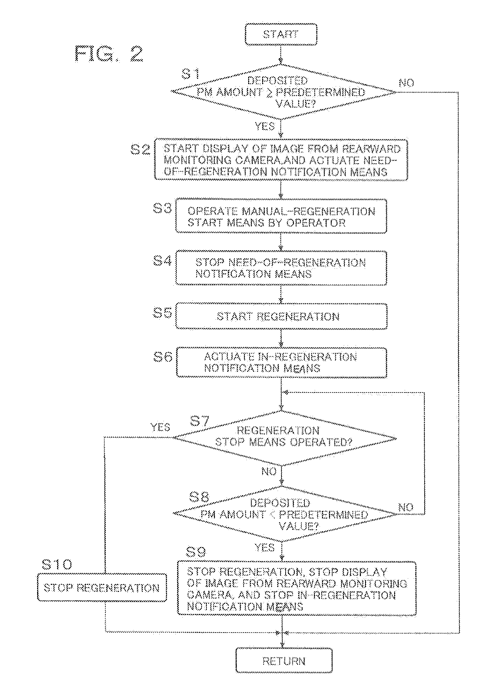

FIG. 2 is a flowchart illustrating a processing procedure in the post-treatment system according to the first embodiment of the present invention.

In the hydraulic excavator 1 provided with the post-treatment system according to the first embodiment having such construction as described above, the unillustrated hydraulic pump is driven by a drive of the engine 2 as mentioned above. By pressure oil delivered from this hydraulic pump, unillustrated hydraulic actuators such as travel motors, swing motor, boom cylinder, arm cylinder and bucket cylinder are selectively actuated to perform traveling, revolving, or driving of the front working mechanism 1c.

While such an operation is being performed, exhaust gas from the engine 2 is guided into the exhaust passage 3 shown in FIG. 1, an amount of PM deposited in the filter 4 arranged in the exhaust passage 3 is sensed by the deposited PM amount sensing means 6, and its sensing signal is inputted into the controller 10. At the controller 10, a determination is made as to whether or not the deposited PM amount is equal to or greater than the predetermined value as illustrated in step S1 of FIG. 2. When the deposited PM amount is smaller than the predetermined value, the filter 4 is considered to be in a state that no regeneration is needed yet, and accordingly, no regeneration treatment is conducted.

When the determination in step S1 results in "YES" and the filter 4 is considered to need regeneration treatment, the routine advances to step S2, and by control processing at the display start processing unit included in the controller 10, the monitoring information from the rearward monitoring camera 8, specifically an image of a scene rearward of the body is displayed on the display screen 9a of the display module 9. When control processing is executed at the display-start processing unit, the need-of-regeneration notification means 9b in the display module 9 is actuated by control processing at the need-of-regeneration notification processing unit included in the controller 10, whereby the display of warning is made to the effect that regeneration of the filter 4 should be conducted.

The routine then advances to step S3, and an operating person of the hydraulic excavator, specifically an operator, who has confirmed the display of warning on the display module 9 by the need-of-regeneration notification means 9b operates the manual regeneration start means 9c composed, for example, of the switch on the display module 9. An operation signal from the manual regeneration start means 9c is inputted into the controller 10.

The routine then advances to step S4, and by control processing at the need-of-regeneration notification stop processing unit, which is included in the controller 10, in accordance with the operation signal from the manual regeneration start means 9c, the display of warning on the display module 9 by the need-of-regeneration notification means 9b is stopped.

The routine then advances to step S6, and by control processing at the manual regeneration start processing unit and control processing at the regeneration processing unit, which are both included in the controller 10, in accordance with the operation signal from the manual regeneration start means 9c, fuel is injected from the fuel injector 7 to start burning and removing PM.

The routine then advances to step S6, and, while regeneration treatment of the filter 4 is under way by the fuel injector 7 in accordance with the above-mentioned control processing at the regeneration processing unit, the in-regeneration notification means 9d in the display module 9 is actuated by control processing at the in-regeneration notification processing unit included in the controller 10, so that a warning is continuously displayed to the effect that the regeneration treatment of the filter 4 is under way.

The routine then advances to step S7, and a determination is made as to whether or not the regeneration stop means has been operated, specifically whether or not the key switch 5 has been put back to the initial position. If this determination results in "NO", the procedure advances to step S8, and a determination is made as to whether or not the deposited PM amount sensed by the deposited PM amount sensing means has become smaller than the predetermined value. If this determination results in "NO", the routine returns to step S7, and the injection of fuel from the fuel injector 7 is continued so that the regeneration treatment of the filter 4 is continued.

If the above-mentioned determination in step S8 results in "YES", that is, the deposited PM amount sensed by the deposited PM amount sensing means 6 has become smaller than the predetermined value, the regeneration of the filter 4 is considered to have been completed, and the routine advances to step S9.

In step S9, the display of the monitoring information on the display module 9 by the rearward monitoring camera 8 is stopped in accordance with control processing at the display-stop processing unit included in the controller 10. Further, by control processing at the in-regeneration notification stop processing unit, which is included in the controller 10, in accordance with the above-mentioned processing, the display of warning on the display module 9 by the in-regeneration notification means 9d is stopped.

It is to be noted that, when the operator watching the display screen 9a of the display module 9 has confirmed on the display screen 9a any object such as, for example, someone or a flammable item behind the body of the hydraulic excavator 1, the operator operates, for example, the key switch 5 back to the initial position. In other words, the regeneration stop means is operated. As a result, the above-mentioned determination in step S7 results in "YES", and the routine advances to step S10.

In step S10, the injection of fuel from the fuel injector 7 is forcedly stopped by control processing at the regeneration stop processing unit included in the controller 10. As a result, the temperature of exhaust gas flowing through the exhaust passage 3 is prevented from rising.

It is to be noted that the continuous steps ranging from step S2 to step S9 or S10, which are illustrated in FIG. 2, at the controller 10 make up the display continuation processing unit for executing the control processing to continuously display the monitoring information from the rearward monitoring camera 8 on the display screen 9a of the display module 9 during the above-mentioned regeneration treatment by the fuel injector 7.

According to the first embodiment constructed as described above, the monitoring information from the monitoring camera 8 is continuously displayed on the display screen 9a of the display module 9 as mentioned above by the control processing at the display continuation processing unit, which is included in the controller 10, while the regeneration of the filter 4 is under way by the injection of fuel from the fuel injector 7. Based on this display on the display screen 9a of the display module 9, the operator can surely ascertain in the course of the regeneration whether or not there is any object approaching the body from behind. If any object approaching the body from behind is recognized on the display screen 9a of the display module 9 in the course of such regeneration, the key switch 5, for example, is operated back to the initial position to forcedly stop the regeneration as illustrated in step S7 or step S10 of FIG. 2. In this manner, a prompt measure can be taken to avoid a danger to an object approaching the body. It is to be noted that a measure may be taken to move the hydraulic excavator 1 to a place, where the danger can be avoided, in combination with the above-mentioned stop of the regeneration or without performing the stop of the regeneration.

The display continuation processing unit, which executes control processing to continuously display the monitoring information from the rearward monitoring camera 8 on the display screen 9a of the display module 9 during the regeneration treatment of the filter 4 by injection of fuel from the fuel injector 7, and the regeneration processing unit, which executes control processing to realize the regeneration by the fuel injector 7, are included in the controller 10. Therefore, the post-treatment system according to the first embodiment can be reduced in the number of processing units, can be simplified in construction, and is economical.

In the first embodiment, the regeneration of the filter 4 can be realized in accordance with the operator's manual operation when, as mentioned above, the operator operates the manual regeneration start means 9c based on a notification by the need-of-regeneration notification means 9b in the display module 9, specifically a display of warning to the effect that the filter 4 should be regenerated. Specifically, the regeneration of the filter 4 can be started depending on the operator's decision.

As the display module 9 is provided with the in-regeneration notification means 9d and the controller 10 includes the in-regeneration notification processing unit, the notification by the in-regeneration notification means 9d, specifically the display of warning to the effect that regeneration treatment of the filter 4 is under way makes it possible to surely remind the operator or people around the hydraulic excavator 1 that the filter 4 is in regeneration and is in a state that requires attention. As a consequence, excellent safety can also be assured.

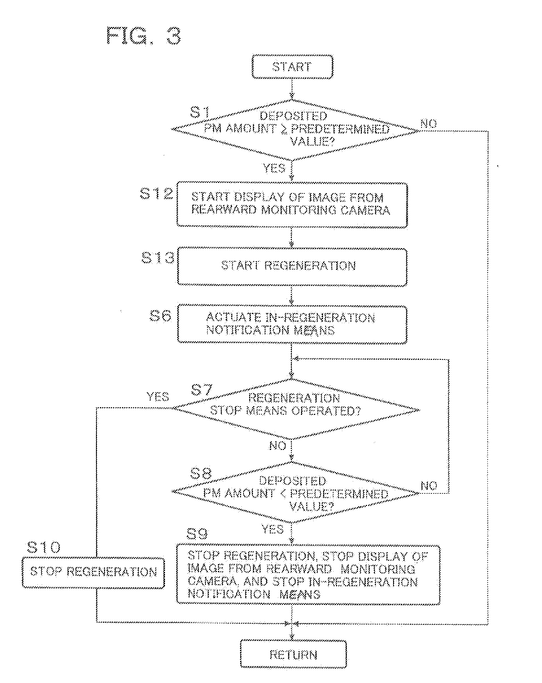

FIG. 3 is a flowchart illustrating a processing procedure in a post-treatment system according to a second embodiment of the present invention. It is to be noted that a vehicle on which this second embodiment is arranged can also be, for example, the hydraulic excavator shown in FIG. 1.

While the regeneration of the filter 4 is started by the operator's manual operation of the manual regeneration start means 9c in the above-mentioned first embodiment, the second embodiment automatically performs the regeneration of the filter 4. In this second embodiment, the display module 9, for example, is hence provided with neither the manual regeneration start means 9c nor the need-of-regeneration notification means 9b, and the above-mentioned need-of-regeneration notification processing unit, need-of-regeneration notification stop processing unit and manual regeneration start processing unit are not included in the controller 10 accordingly.

In this second embodiment, the controller 10 includes a display start processing unit and an automated regeneration start processing unit. The display start processing unit is similar to the corresponding unit in the first embodiment, and executes control processing to start a display of monitoring information from the rearward monitoring camera 8 on the display screen 9a of the display module 9 when the deposited PM amount sensed by the deposited PM amount sensing means 6 has become equal to or greater than the predetermined value at and over which regeneration is needed. The automated regeneration start processing unit automatically starts control processing at the regeneration processing unit to execute processing, which actuates the fuel injector 7, in accordance with the control processing at the display start processing unit.

The remaining construction other than the control 10 and the remaining processing units included in the controller 10 are similar to the above-mentioned corresponding ones in the first embodiment.

While the engine 2 is driven and an operation for traveling, revolving or driving of the front working mechanism 1c is performed in the post-treatment system according to the second embodiment constructed as described above, exhaust gas from the engine 2 is guided into the exhaust passage 3 shown in FIG. 1, and as illustrated in step S1 of FIG. 3, a determination is made as to whether or not the deposited PM amount sensed by the deposited PM amount sensing means 6 is equal to or greater than the predetermined value. When the deposited PM amount is smaller than the predetermined value, the filter 4 is considered to be in a state that no regeneration is needed yet, and accordingly, no regeneration treatment is conducted.

When the determination in step S1 results in "YES" and the filter 4 is considered to need regeneration treatment, the routine advances to step S12, and by control processing at the display start processing unit included in the controller 10, a display of monitoring information from the rearward monitoring camera 8, specifically an image of a scene rearward of the body on the display screen 9a of the display module 9 is started.

The routine then advances to step S13, and by control processing at the automated regeneration start processing unit, which is included in the controller 10, in accordance with the above-mentioned control processing at the display start processing unit, fuel is injected from the fuel injector 7 to start burning and removing PM. The processings in the subsequent steps S6 to S9 or S10 are similar to the above-mentioned corresponding processings in the first embodiment.

In the second embodiment constructed as described above, the continuous steps through steps S12, S13, and S6 to S9 or S10, which are illustrated in FIG. 3, at the controller 10 make up the display continuation processing unit for executing control processing to continuously display the monitoring information from the rearward monitoring camera 8 on the display screen 9a of the display module 9 during the regeneration treatment by the fuel injector 7.

Similar to the first embodiment, the second embodiment constructed as described above also include the display continuation processing unit in the controller 10 to continuously display the monitoring information from the rearward monitoring camera 8 on the display screen 9a of the display module 9 during the regeneration. Therefore, the second embodiment can bring about similar advantageous effects as the first embodiment. In addition, this second embodiment can automatically conduct the regeneration treatment of the filter 4 without needing the operator's operation whenever the filter 4 should be regenerated.

In the first embodiment, the need-of-regeneration notification means 9b and manual regeneration start means 9c are both included in the display module 9, and in the first and second embodiments, the in-regeneration notification means 9d is included in the display module 9. However, theseneed-of-regenerationnotificationmeans 9b, manual regeneration start means 9c and in-regeneration notification means 9d may all be arranged independently at other locations instead of being arranged in the display module 9.

As notifications by the need-of-regeneration notification means 9b and in-regeneration notification means 9d, warnings are displayed. However, the first and second embodiments may be constructed to turn on warning lamps or to sound alarms instead of displaying such warnings.

In the above-described first and second embodiments, the regeneration stop means is constructed to also serve as the key switch 5 that starts the engine 2. However, the regeneration stop means may be arranged independently from the key switch 5. For such independent arrangement as mentioned above, the regeneration stop means may be arranged in the operator's cab 1d.

In the above-described first and second embodiments, the regeneration means is constructed by the fuel injector 7 attached to the engine 2. However, it is possible to construct the regeneration means by another fuel injector similar in construction to the fuel injector 7 attached to the engine 2 and to arrange the another fuel injector such that fuel can be injected into the exhaust passage 3 of the engine 2.

As the regeneration means, it is also possible to arrange an electric heater instead of the above-mentioned fuel injector 7 or the like and to heat the filter 4 or the interior of the exhaust passage 3 by the electric heater.

In the foregoing description, the first embodiment is constructed to enable regeneration of the filter 4 by a manual operation, and the second embodiment is constructed to enable automated regeneration of the filter 4. It is, however, possible to combine the first embodiment and the second embodiment together and to arrange a switching means for selectively switching manual regeneration to automated regeneration and vice versa such that the above-mentioned manual regeneration treatment by the first embodiment or the above-mentioned automated regeneration by the second embodiment can be selectively enabled as needed.

### Legend

- 1: Hydraulic excavator (vehicle)
- 1a: Travel base
- 1b: Revolving upperstructure
- 1c: Front working mechanism
- 1d: Operator's cab
- 2: Engine
- 3: Exhaust passage
- 4: Filter
- 5: Key switch (regeneration stop means)
- 6: Deposited PM amount sensing means
- 7: Fuel injector (regeneration means)
- 8: Rearward monitoring camera (rearward monitoring means)
- 9: Display module
- 9a: Display screen
- 9b: Need-of-regeneration notification means
- 9c: Manual regeneration state means
- 9d: In-regeneration notification means
- 10: Controller (control module)

## Claims

1. An exhaust gas post-treatment system for a vehicle having an engine, said system being arranged on the vehicle and being provided with:
a filter arranged in an exhaust passage of the engine to trap PM therein,
a trapped and deposited PM amount sensing means for sensing a deposited amount of PM deposited in the filter,
a regeneration means for raising a temperature of exhaust gas flowing into the filter such that PM deposited in the filter is burned and removed to conduct regeneration of the filter,
a rearward monitoring means for monitoring a scene rearward of a body of the vehicle,
a display module for displaying monitoring information from the rearward monitoring means, and
a control module having a regeneration processing unit for executing control processing to perform regeneration by the regeneration means, wherein:
the control module is provided with a display continuation processing unit for executing control processing such that during regeneration treatment by the regeneration means, the monitoring information from the rearward monitoring means is continuously displayed on the display module.

2. The system according to claim 1, wherein:
the control module includes the display continuation processing unit.

3. The system according to claim 2, further comprising:
a need-of-regeneration notification means for making a notification to urge regeneration by the regeneration means, and
a manual regeneration start means for instructing a start of regeneration by the regeneration means,
wherein the control module has a display-start processing unit for executing control processing to start displaying the monitoring information from the rearward monitoring means on the display module when the deposited amount of PM as sensed by the deposited PM amount sensing means has reached a value at and over which regeneration is needed, a need-of-regeneration notification processing unit for executing control processing to actuate the need-of-regeneration notification means when the control processing at the display-start processing unit has been executed, and a need-of-regeneration notification stop processing unit for executing control processing to stop a notification by the need-of-regeneration notification means when the manual regeneration start means has been operated.

4. The system according to claim 2, wherein the control module has:
a display-start processing unit for executing control processing that starts displaying the monitoring information from the rearward monitoring means on the display module when the deposited amount of PM as sensed by the deposited PM amount sensing means has reached a value at and over which regeneration is needed, and
a regeneration-start processing unit for automatically starting the control processing at the regeneration processing unit in accordance with the control processing at the display-start processing unit.

5. The system according to any one of claims 2-4, further comprising:
an in-regeneration notification means for notifying that regeneration treatment by the regeneration means is under way,
wherein the control module has an in-regeneration notification processing unit for executing control processing to keep the in-regeneration notification means actuated in accordance with control processing at the regeneration processing unit during the regeneration treatment by the regeneration means.

6. The system according to any one of claims 2-5, further comprising:
a regeneration stop means for instructing a stop of regeneration treatment by the regeneration means,
wherein the control module has a regeneration-stop processing unit for executing control processing to forcedly stop the regeneration treatment, which is under way by the regeneration means, when the regeneration stop means has been operated.
